(19)

Europäisches
Patentamt

European
Patent Office

Office européen
des brevets

(11) **EP 4 456 251 A1**

(12) **EUROPEAN PATENT APPLICATION**
published in accordance with Art. 153(4) EPC

(43) Date of publication:
**30.10.2024  Bulletin 2024/44**

(21) Application number: **22910280.1**

(22) Date of filing: **18.11.2022**

(51) International Patent Classification (IPC):
**H01M 10/48** *(2006.01)*  **H02J 7/00** *(2006.01)*

(52) Cooperative Patent Classification (CPC):
**H01M 10/48; H02J 7/00;** Y02E 60/10

(86) International application number:
**PCT/IB2022/000651**

(87) International publication number:
**WO 2023/118960 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.12.2021  JP 2021207116**

(71) Applicants:
• **NISSAN MOTOR CO., LTD.
Kanagawa 221-0023 (JP)**

• **Renault s.a.s
92100 Boulogne Billancourt (FR)**

(72) Inventors:
• **MIZUNO, Yoshifumi
Atsugi-shi, Kanagawa 243-0123 (JP)**
• **KOTAKA, Toshikazu
Atsugi-shi, Kanagawa 243-0123 (JP)**
• **AOTANI, Koichiro
Atsugi-shi, Kanagawa 243-0123 (JP)**

(74) Representative: **Grünecker Patent- und
Rechtsanwälte
PartG mbB
Leopoldstraße 4
80802 München (DE)**

(54)  **METHOD FOR CHARGING ALL-SOLID-STATE BATTERY AND CHARGING CONTROL DEVICE**

(57)  A method for charging an all-solid-state battery that includes a negative electrode containing lithium metal and a solid electrolyte layer includes: measuring an impedance value using an impedance measuring device that measures impedance of the all-solid-state battery in an interface between the negative electrode and the solid electrolyte layer; determining whether the measured impedance value is within an allowable impedance range; and allowing charging the all-solid-state battery when the measured impedance value is within the allowable impedance range. The allowable impedance range is determined by an allowable impedance map and a charging current density to charge the all-solid-state battery, and the allowable impedance map associates the charging current density with an allowable impedance value at which charging is allowed.

FIG. 7

```
                    START
S1    MEASURE IMPEDANCE VALUE
S2    DETERMINE ALLOWABLE IMPEDANCE RANGE
S3    IS IMPEDANCE VALUE WITHIN        N
      ALLOWABLE IMPEDANCE RANGE?
              Y
S4    ALLOW CHARGING
S5    START CHARGING
S6    MEASURE IMPEDANCE VALUE
S7    DETERMINE ALLOWABLE IMPEDANCE RANGE
S8    IS IMPEDANCE VALUE WITHIN        N
      ALLOWABLE IMPEDANCE RANGE?
              Y
S9    IS CHARGING           S10   CHARGING IS NOT ALLOWED
      TERMINATED?
        N    Y
                    END
```

EP 4 456 251 A1

**Description**

Technical Field

The present invention relates to a method for charging an all-solid-state battery and a charge control device.
This application is based upon, and claims the benefit of priority from, corresponding Japanese Patent Application No. 2021-207116 filed in the Japan Patent Office on December 21, 2021, and for the designated countries where incorporation by reference of literature is permitted, the entire contents of which are incorporated herein by reference.

Background Art

Conventionally, there has been known an internal short-circuit state estimation method that measures an alternating current impedance of an all-solid-state lithium-ion secondary battery and estimates presence/absence of a possibility of generating internal short circuits (Patent Document 1). The internal short-circuit state estimation method described in Patent Document 1 calculates an electrolyte resistance component and a reaction resistance component from the alternating current impedance, plots the electrolyte resistance component as one axis component and the reaction resistance component as the other axis component on plane coordinates formed of two axis components and acquires internal resistance coordinates. Next, using a plurality of the internal resistance coordinates, an approximate straight line is obtained, and the approximate straight line is compared with a map showing a normal region, an internal short-circuit region, and a potential short-circuit region regarding the internal resistance coordinate to calculate a distance between an intersection point between the potential short-circuit region and the approximate straight line and the internal resistance coordinate. When the calculated distance is a preliminarily determined threshold or less, it is estimated that there is a possibility of internal short circuits in the all-solid-state lithium-ion secondary battery.

Prior Art Document

Patent Document

Patent Document 1: JP-A-2020-167069

Summary of Invention

Problems to Be Solved by Invention

However, with the estimation method of the above-described prior art, when a contact area in an interface between a lithium negative electrode and a solid electrolyte layer is excessive, since a possibility of generating internal short circuits cannot be detected, the all-solid-state battery is possibly charged in a state of the excessive contact area.
A object to be achieved by the present invention is to provide a charging method and a charge control device that allow estimating an excessive state of a contact area in an interface between a negative electrode and a solid electrolyte layer and charging an all-solid-state battery while reducing short circuits.

Means for Solving Problems

The present invention solves the above-described problem by: measuring an impedance value in an interface between a negative electrode and a solid electrolyte layer of an all-solid-state battery; determining whether the impedance value is within an allowable impedance range determined by an allowable impedance map and a charging current density; and allowing charging the all-solid-state battery when the measured impedance value is within the allowable impedance range.

Effects of Invention

According to the present invention, the all-solid-state battery can be charged while reducing short circuits.

Brief Description of Drawings

FIG. 1 is a block diagram illustrating a charge control system of a secondary battery according to an embodiment.

FIG. 2 is a plan view of the secondary battery according to the embodiment.

FIG. 3 is a cross-sectional view of the secondary battery taken along the line III-III of FIG. 2.

FIG. 4 is a schematic diagram of a contact state of a negative electrode interface.

FIG. 5(a) is a graph showing a property of a chargeable capacity with respect to a double layer capacitance of the negative electrode interface, and FIG. 5(b) is a graph showing a property of the chargeable capacity with respect to a reaction resistance of the negative electrode interface.

FIG. 6(a) is a graph showing the property of the chargeable capacity with respect to the double layer capacitance of the negative electrode interface according to a magnitude of a charging current density, and FIG. 6(b) is a graph showing the property of the chargeable capacity with respect to the reaction resistance of the negative electrode interface according to the magnitude of the charging current density.

FIG. 7 is a flowchart depicting a procedure of a control process in a charge control system according to the embodiment.

Mode(s) for Carrying Out the Invention

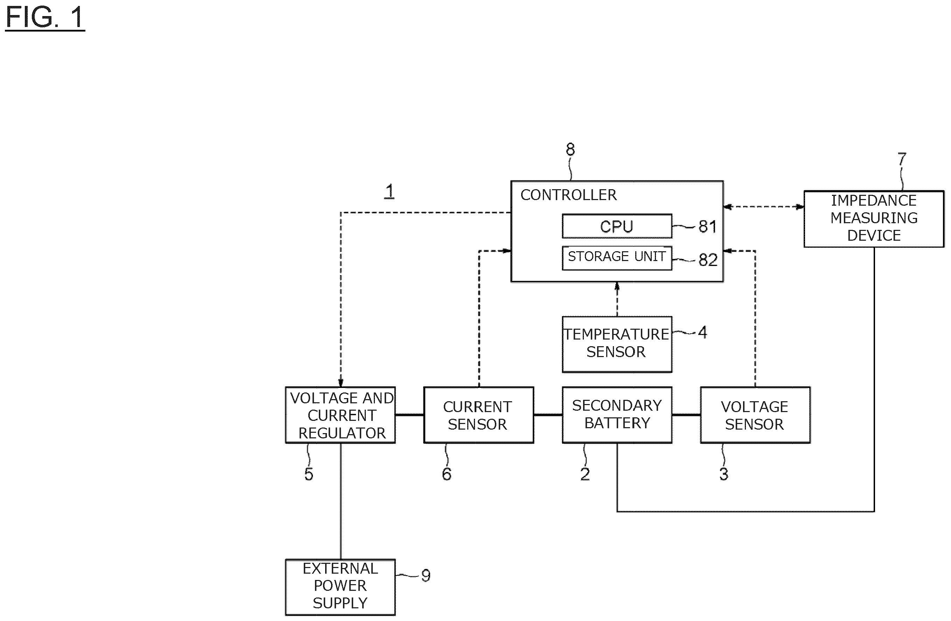

FIG. 1 is a diagram illustrating a configuration of a charge control system of an all-solid-state battery according to an embodiment. The charge control system according to the embodiment measures an impedance value in a negative electrode interface of the all-solid-state battery, determines whether the impedance value is within an allowable impedance range, allows charging the all-solid-state battery according to the determination result, and performs charging. The charge control system 1, as illustrated in FIG. 1, includes a secondary battery 2, a voltage sensor 3, a temperature sensor 4, a voltage and current regulator 5, a current sensor 6, an impedance measuring device 7, a controller 8, and an external power supply 9. The charge control system illustrated in FIG. 1 is a system to determine whether charging can be performed before charging and/or during charging and charge the secondary battery 2 by electric power of the external power supply 9.

As one example of the secondary battery 2 according to the embodiment, an all-solid-state lithium-ion secondary battery will be described. The secondary battery 2 is an all-solid-state battery and includes a power generating element that includes a positive electrode including a positive electrode active material layer containing a positive electrode active material that allows occluding and discharging lithium ions, a negative electrode including a negative electrode active material layer containing a negative electrode active material that allows occluding and discharging lithium ions, and a solid electrolyte layer interposed between the positive electrode active material layer and the negative electrode active material layer. In addition to the power generating element, the secondary battery 2 includes electrode tabs and an exterior member that houses the electrode tabs and the power generating element. A detailed structure and materials of the secondary battery will be described later.

The voltage sensor 3 is a sensor to detect an input/output voltage of the secondary battery 2 and detects a cell voltage (an inter-terminal voltage) between the positive electrode and the negative electrode of the secondary battery 2. A connection position of the voltage sensor 3 is not particularly limited and only needs to be a position where the cell voltage between the positive electrode and the negative electrode can be detected in a circuit connected to the secondary battery 2.

The temperature sensor 4 measures an outer surface temperature (an environmental temperature) of the secondary battery 2. The temperature sensor 4 is, for example, mounted on a surface of a case (an exterior body, a housing body) of the secondary battery 2.

The voltage and current regulator 5 is a circuit to adjust a battery current and the cell voltage during charging and/or discharging the secondary battery 2 and adjusts the current/voltage of the secondary battery 2 based on a command from the controller 8. The voltage and current regulator 5 includes a voltage conversion circuit to convert the electric power output from the external power supply into a charging voltage of the secondary battery, and the like.

The current sensor 6 is a sensor to detect an input/output current of the secondary battery 2. The current sensor 6 detects a current supplied from the voltage and current regulator 5 to the secondary battery 2 during charging the secondary battery 2 and detects a current supplied from the secondary battery 2 to the voltage and current regulator 5 during discharge.

The impedance measuring device 7 is connected to the secondary battery 2, flows an AC perturbation current to the secondary battery 2 as an input signal, and acquires a response voltage according to an alternating current signal (an alternating current) to measure an alternating current impedance (a complex impedance) of the secondary battery 2. The impedance measuring device 7 only needs to be arbitrarily selected among ones ordinarily used as a general alternating current impedance measurement device. For example, the impedance measuring device 7 may be one that measures an alternating current impedance of the secondary battery 2 by changing a frequency of the AC perturbation current over time by an alternating current impedance method. Additionally, the impedance measuring device 7 may be one to which a plurality of AC perturbation currents having different frequences can be simultaneously applied. The measurement method of the alternating current impedance in the alternating current impedance method is not particularly limited. For example, an analog method, such as a Lissajous method and an alternating current bridge method, and a digital method, such as a digital Fourier integration method and a fast Fourier transformation method by application of noise, may be appropriately employed. In the embodiment, a plurality of AC perturbation currents having different frequencies are applied to the secondary battery 2 and the alternating current impedance is measured. The plurality of frequencies only need to be in a range in which, for example, the reaction resistance component of the secondary battery 2 can be calculated from a graph that plots a real part component Z' and an imaginary part component Z" constituting an alternating current impedance Z measured by the impedance measuring device 7 on a complex plane coordinate (a Nyquist plot or a Cole-Cole plot). An amplitude of a waveform of the AC perturbation current applied to the battery (for example, a sine wave) or the like is not particularly limited and arbitrarily set. The measurement result of the alternating current impedance measured by the impedance measuring device 7 is transmitted to the controller 8 as an output of the impedance measuring device 7.

The controller 8 includes a CPU 81, a storage unit 82, and the like. The controller 8 is a control device that determines the presence/absence of deposition of lithium contained in the secondary battery 2 based on the reaction resistance of the secondary battery 2 measured by the impedance measuring device 7. Additionally, the controller 8 controls charging of the secondary battery 2 based on the cell voltage of the secondary battery 2 detected by the voltage sensor 3 and a charge/discharge current flowing through the secondary battery 2 detected by the current sensor 6.

The external power supply 9 is a power supply to charge the secondary battery 2. As the power supply, for example, a three-phase 200V alternating current power supply is used. The external power supply 9 may be a single-phase 100V or a single-phase 200V alternating current power supply. The external power supply 9 is not limited to an alternating current but may be a direct current power supply.

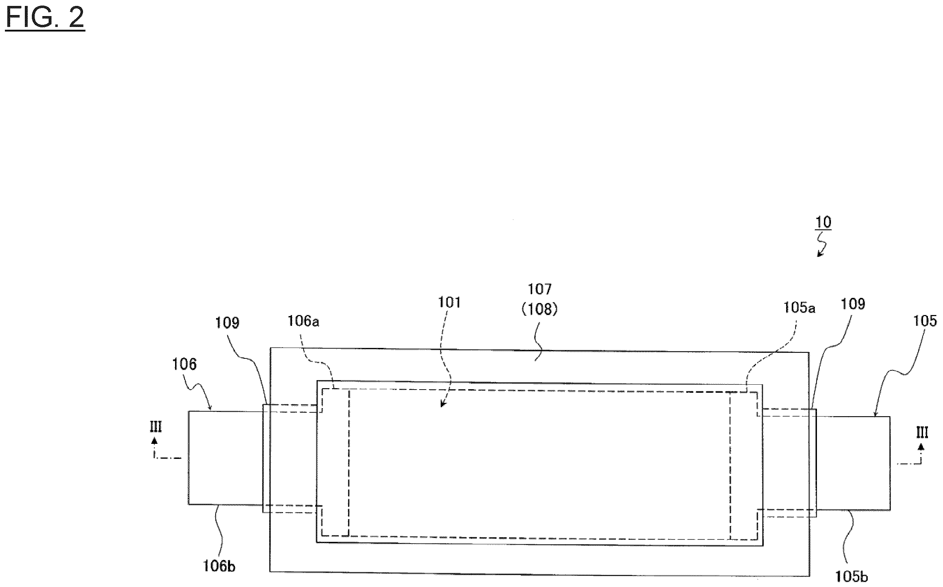

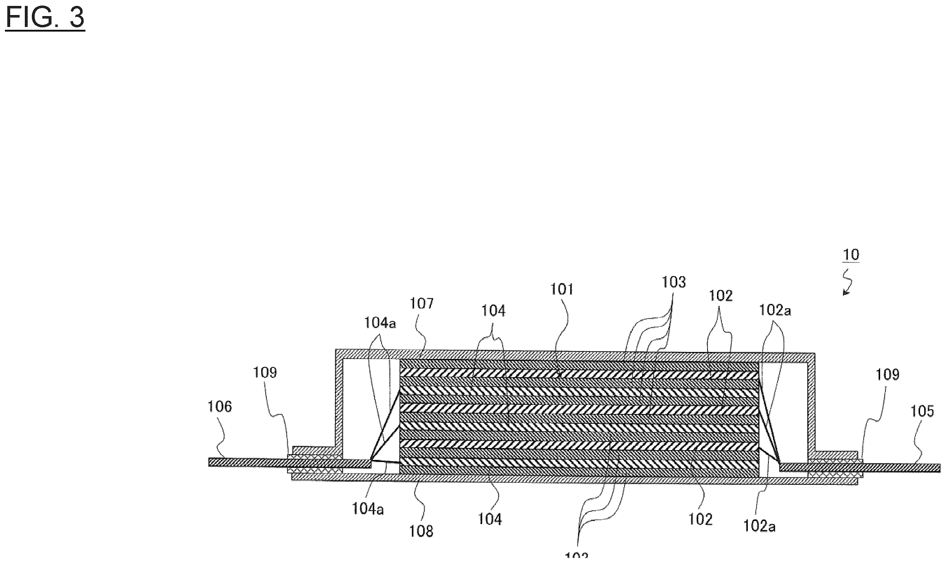

Next, with reference to FIG. 2 and FIG. 3, the structure of the secondary battery (the all-solid-state lithium-ion secondary battery) 2 will be described. FIG. 2 illustrates a plan view of the secondary battery 2 according to the embodiment, and FIG. 3 illustrates a cross-sectional view of the secondary battery 2 taken along the line III-III of FIG. 2.

As illustrated in FIG. 2 and FIG. 3, the secondary battery 2 includes a power generating element 101 that includes three positive electrode layers 102, seven electrolyte layers 103, and three negative electrode layers 104, a positive electrode tab 105 connected to the respective three positive electrode layers 102, a negative electrode tab 106 connected to the respective three negative electrode layers 104, and an upper exterior member 107 and a lower exterior member 108 that house and seal the power generating element 101, the positive electrode tab 105, and the negative electrode tab 106.

The numbers of the positive electrode layers 102, the electrolyte layers 103, and the negative electrode layers 104 are not particularly limited, so the power generating element 101 may be configured by one positive electrode layer 102, three electrolyte layers 103, and one negative electrode layer 104, or, as necessary, the numbers of the positive electrode layers 102, the electrolyte layers 103, and the negative electrode layers 104 may be appropriately selected.

The positive electrode layer 102 constituting the power generating element 101 includes a positive electrode side current collector 102a extending to the positive electrode tab 105 and positive electrode active material layers each formed on a part of both principal surfaces of the positive electrode side current collector 102a. The positive electrode side current collector 102a constituting the positive electrode layer 102, for example, can be constituted by electrochemically stable metal foil, such as aluminum foil, aluminum alloy foil, copper titanium foil, or stainless steel foil. For the positive electrode side current collector 102a, as metal, nickel, iron, copper, or the like may be used. In addition to them, for example, a clad material of nickel and aluminum, a clad material of copper and aluminum, and the like may be used.

For the positive electrode side current collector 102a, instead of the metal, a conductive resin may be used. The conductive resin can be constituted by a resin with a non-electroconductive polymer material to which a conductive filler is added as necessary. As the non-electroconductive polymer material, a material having excellent potential resistance, such as polyethylene (such as PE, high-density polyethylene (HDPE) and low-density polyethylene (LDPE)), polypropylene (PP), and polyethylene terephthalate (PET), is used. As long as the conductive filler is a substance having conductivity, the conductive filler can be used without particular limitation. Examples of the material having excellent electrical conductivity, potential resistance, and lithium-ion blocking property include metal and conductive carbon. The metal is not particularly limited, and is at least one kind of metal selected from the group consisting of Ni, Ti, Al, Cu, Pt, Fe, Cr, Sn, Zn, In, and Sb or an alloy or a metal oxide containing the metals.

The positive electrode active material layer constituting the positive electrode layer 102 is not particularly limited but includes a layered rock salt active material, such as $LiCoO_2$, $LiMnO_2$, $LiNiO_2$, $LiVO_2$, and $Li(Ni\text{-}Mn\text{-}Co)O_2$, a spinel active material, such as $LiMn_2O_4$ and $LiNi_{0.5}Mn_{1.5}O_4$, an olivine active material, such as $LiFePO_4$ and $LiMnPO_4$, and an Si-containing active material, such as $Li_2FeSiO_4$ and $Li_2MnSiO_4$. An example of the oxide active material other than the above-described ones includes $Li_4Ti_5O_{12}$. Composite oxide containing lithium and nickel is preferably used, and further preferably one formed by replacing $Li(Ni\text{-}Mn\text{-}Co)Oz$ and some of these transition metals with another element (hereinafter simply also referred to as an "NMC composite oxide") is used.

As the positive electrode active material layer, a sulfur-based positive electrode active material may be used. The sulfur-based positive electrode active material includes particles or a thin film of an organic sulfur compound or an inorganic sulfur compound and only needs to be a substance that can discharge lithium ions during charging and occlude the lithium ions during discharge using redox reaction of sulfur.

As necessary, the positive electrode active material layer may further contain at least one of solid electrolyte, a conductive auxiliary agent, or a binder. Examples of the solid electrolyte include sulfide solid electrolyte and oxide solid electrolyte, and, for example, ones exemplified as solid electrolyte by which the electrolyte layer 103 can be constituted described later can be used.

The respective positive electrode side current collectors 102a constituting the three positive electrode layers 102 are bonded to the positive electrode tab 105. As the positive electrode tab 105, for example, aluminum foil, aluminum alloy foil, copper foil, or nickel foil can be used.

The negative electrode layer 104 constituting the power generating element 101 includes a negative electrode side current collector 104a extending to the negative electrode tab 106 and negative electrode active material layers each formed on a part of both principal surfaces of the negative electrode side current collector 104a.

The negative electrode side current collector 104a of the negative electrode layer 104 is, for example, electrochemically stable metal foil, such as nickel foil, copper foil, stainless steel foil, or iron foil.

The negative electrode layer 104 is formed of a layer containing a negative electrode active material. The kind of the negative electrode active material is not particularly limited but is a carbon material, a metal oxide, and a metal active material. Examples of the carbon material include natural graphite, artificial graphite, mesocarbon microbeads (MCMB), highly oriented pyrolytic graphite (HOPG), hard carbon, and soft carbon. Examples of the metal oxide include $Nb_2O_5$, $Li_4Ti_5O_{12}$, and SiO. Furthermore, examples of the metal active material include single metal, such as In, Al, Si, and Sn and an alloy, such as TiSi and $La_3Ni_2Sn_7$.

The negative electrode active material may be a lithium alloy containing Li. An example of the lithium alloy includes an alloy of lithium and at least one kind of metal selected from gold (Au), magnesium (Mg), aluminum (Al), calcium (Ca), zinc (Zn), tin (Sn), and bismuth (Bi). The lithium alloy may be an alloy of lithium and two or more kinds of metals among the above-described metals. Specific examples of the lithium alloy include a lithium-gold alloy (Li-Au), a lithium-magnesium alloy (Li-Mg), a lithium-aluminum alloy (Li-Al), a lithium-calcium alloy (Li-Ca), a lithium-zinc alloy (Li-Zn), a lithium-tin alloy (Li-Sn), and a lithium-bismuth alloy (Li-Bi). The negative electrode active material layer only needs to contain a lithium alloy, and the configuration is not particularly limited.

In the secondary battery 2 of the embodiment, in the three negative electrode layers 104, the respective negative electrode side current collectors 104a constituting the negative electrode layers 104 have a configuration of being bonded to the single negative electrode tab 106. That is, in the secondary battery 2 of the embodiment, the respective negative electrode layers 104 have a configuration of being bonded to the single common negative electrode tab 106.

The electrolyte layer 103 of the power generating element 101 is a layer that avoids short circuits of the above-described positive electrode layer 102 with the negative electrode layer 104, contains solid electrolyte as a main component, and is interposed between the above-described positive electrode active material layer and negative electrode active material layer. Examples of the solid electrolyte include sulfide solid electrolyte, oxide solid electrolyte, and polymer solid electrolyte. The solid electrolyte layer 103 may further contain a binder.

As illustrated in FIG. 3, the positive electrode layers 102 and the negative electrode layers 104 are alternately stacked via the electrolyte layers 103, and furthermore, the respective electrolyte layers 103 are stacked as the uppermost layer and the lowermost layer to form the power generating element 101.

The power generating element 101 configured as described above is housed and sealed by the upper exterior member 107 and the lower exterior member 108 (sealing means). For example, the upper exterior member 107 and the lower exterior member 108 to seal the power generating element 101 are formed of a flexible material, such as a resin film, such as polyethylene and polypropylene, and a resin-metal thin film laminate material formed by laminating both surfaces of metal foil, such as aluminum, by resin, such as polyethylene and polypropylene. Heat fusion is performed on the upper exterior member 107 and the lower exterior member 108 to seal the power generating element 101 in a state of the positive electrode tab 105 and the negative electrode tab 106 being led outside.

Note that, on the positive electrode tab 105 and the negative electrode tab 106, at parts in contact with the upper exterior member 107 and the lower exterior member 108, to ensure adhesiveness with the upper exterior member 107 and the lower exterior member 108, seal films 109 are disposed. The seal film 109 is not particularly limited but, for example, can be constituted of a synthetic resin material excellent in electrolyte resistance and thermal adhesiveness, such as polyethylene, modified polyethylene, polypropylene, modified polypropylene, or ionomer.

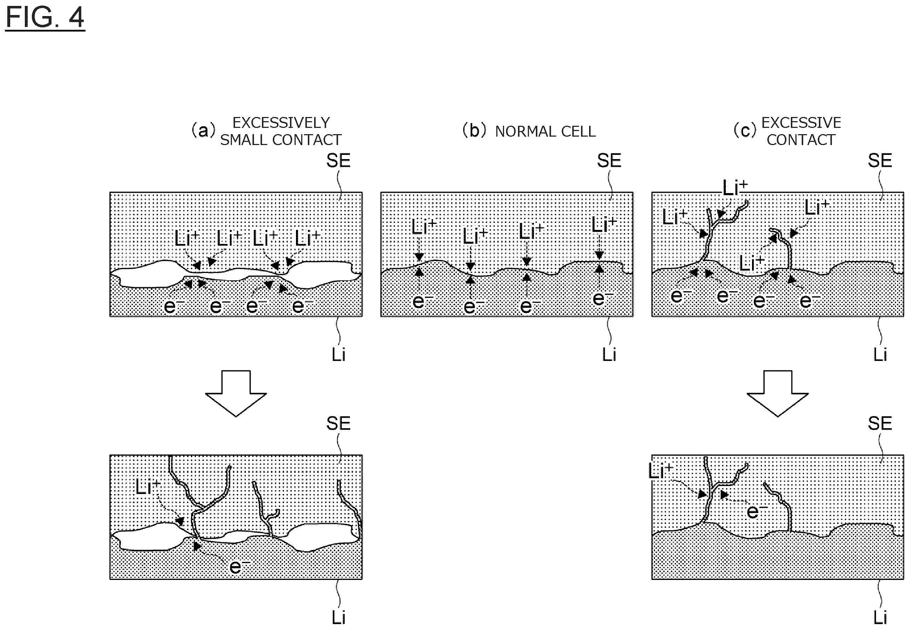

Next, a relationship between dendrite and a contact state of the interface between the solid electrolyte layer and the negative electrode in the secondary battery (the all-solid-state battery) 2 (hereinafter also referred to as the negative electrode interface) will be described with reference to FIG. 4. FIG. 4 is a schematic diagram of the contact state of the negative electrode interface. (a) shows the excessively small contact state of the negative electrode interface, (b) shows the normal state of the contact of the negative electrode interface (the normal cell), and (c) shows the excessive contact state of the negative electrode interface. In (a) and (c), the upper diagram illustrates a schematic diagram before generating the dendrite, and the lower diagram illustrates a schematic diagram after generating the dendrite.

As illustrated in FIG. 4(a), when the contact between the solid electrolyte layer and the negative electrode is insufficient, a part of the solid electrode and the negative electrode are in contact. In the case, lithium ions and electrons gather together in the contact part of the negative electrode interface, and a current density becomes higher than a current density during the normal cell. The lithium is deposited as a metal and becomes the dendrite (see the lower diagram of FIG. 4(a)). Further, when the dendrite breaks through the solid electrolyte layer, a short circuit occurs inside the secondary battery 2.

As illustrated in FIG. 4(c), when the contact between the solid electrolyte layer and the negative electrode is excessive, the lithium metal gets into the solid electrolyte layer. In the case, the reaction of the lithium concentrates on a part and the lithium metal extends inside the solid electrolyte layer, thus becoming the dendrite (see the lower diagram of FIG. 4(c)). On the other hand, when the contact state of the negative electrode interface is satisfactory, compared with the excessively small contact or the excessive contact, the dendrite is less likely to occur.

That is, as in FIGs. 4(a) and 4(c), since non-uniformity of the contact of the negative electrode interface is increased by application of a current, to reduce the dendrite, it is only necessary to allow detecting both of the excessively small contact state and the excessive contact state of the negative electrode interface. In the excessively small contact state of the negative electrode interface, when the dendrite is generated, the cell voltage gradually becomes higher as the charging capacity increases. When the dendrite penetrates the solid electrolyte layer to cause the short circuit, the cell voltage becomes approximately zero. That is, the excessively small contact state can be detected from the change in the cell voltage. On the other hand, in the excessive contact state of the negative electrode interface, even when the dendrite occurs, an increase range of the cell voltage is small, and a voltage drop during the short circuit is small. Therefore, it is difficult to detect the excessive contact state from the cell voltage. Furthermore, it is also difficult to directly detect the contact state (a contact area) of the negative electrode interface. In the embodiment, as a method of indirectly detecting the contact state of the negative electrode interface, an impedance value of the negative electrode interface is measured, and the contact state of the negative electrode interface is estimated from the measured impedance value.

In the embodiment, as an index to detect the excessively small contact state and the excessive contact state of the negative electrode interface, the double layer capacitance and/or the reaction resistance of the negative electrode interface is measured. Note that the double layer capacitance and/or the reaction resistance of the negative electrode interface is equivalent to the impedance value of the negative electrode interface.

A general formula of the double layer capacitance is expressed by the following formula (1).

[Math. 1]

$$C_{dl} = \varepsilon_0 \cdot \varepsilon_{SE} \cdot \frac{A}{l} \tag{1}$$

Note that $C_{dl}$ is an initial state of the secondary battery 2 and the double layer capacitance when the negative electrode interface is uniform, $\varepsilon_0$ is vacuum permittivity, $\varepsilon_{SE}$ is permittivity of the solid electrolyte, A is the contact area of the negative electrode interface (a surface area of the solid electrolyte layer), and l is a thickness of the solid electrolyte.

When the double layer capacitance of the negative electrode interface in the secondary battery 2 after use is $C_{dl}'$ and a surface area is A', a relationship of the following formula (2) is satisfied.

[Math. 2]

$$C_{dl}' = C_{dl} \cdot \frac{A'}{A} \tag{2}$$

From formulae (1) and (2), when the material used for the secondary battery 2 and the battery shape are determined, the double layer capacitance ($C_{dl}$) is in a proportional relationship with the contact area of the negative electrode interface. That is, based on the double layer capacitance in the initial state of the secondary battery 2, the larger the double layer capacitance becomes, the larger the contact area of the negative electrode interface becomes, and the smaller the double layer capacitance becomes, the smaller the contact area of the negative electrode interface becomes. From a difference between the double layer capacitance when the contact area in the negative electrode interface is normal (a perfect contact state) and the double layer capacitance after use of the battery, the contact area of the negative electrode interface after use of the battery can be estimated.

Similarly to the double layer capacitance, the contact area of the negative electrode interface can be estimated from the reaction resistance. When a reaction resistance in the initial state of the secondary battery 2 is $R_{ct}$, the contact area is A, a reaction resistance in the secondary battery 2 after use is $R_{ct}'$, and a contact area is A', a relationship formula of the following formula (3) is expressed.

[Math. 3]

$$R_{ct}' = \frac{R_{ct} \cdot A}{A'} \qquad\qquad (3)$$

From the formula (3), the reaction resistance is in an inverse proportional relationship with the contact area of the negative electrode interface. Based on the reaction resistance in the initial state of the secondary battery 2, the smaller the reaction resistance is, the larger the contact area of the negative electrode interface becomes, and the larger the reaction resistance is, the smaller the contact area of the negative electrode interface becomes. From a difference between the reaction resistance when the contact area in the negative electrode interface is normal (the perfect contact state) and the reaction resistance after use of the battery, the contact area of the negative electrode interface after use of the battery can be estimated. Thus, in the embodiment, from the double layer capacitance and/or the reaction resistance of the negative electrode interface, the contact state (the contact area) of the negative electrode interface is indirectly estimated.

The impedance value required to estimate the contact area of the negative electrode interface can be measured in the following manner. The impedance measuring device 7 applies alternating current signals at many frequency values within a predetermined frequency band to measure a real axis component value ($Z'$) and an imaginary axis component value ($-Z''$) of the alternating current impedance at each frequency value. The predetermined frequency band at least includes the frequency to measure the reaction resistance. On complex plane coordinates in which the real axis and the imaginary axis are orthogonal to one another, the real axis component value is plotted as the real axis component of the complex plane coordinates, and the imaginary axis component value is plotted as the imaginary axis component of the complex plane coordinates. The graph obtained by the plot becomes a complex impedance plot including an arc trajectory (Nyquist plot or Cole-Cole plot), in the case of the all-solid-state battery, the Nyquist plot has three arcs, and the sizes of the arcs indicate resistance of a bulk of the electrolyte from the high frequency side, resistance of a grain boundary of the electrolyte, and the reaction resistance. The reaction resistance of the negative electrode interface can be obtained from a diameter of the arc at the lowest frequency side among the three arcs of the Nyquist plot. The electrolyte resistance ($R_{sep}$) can be obtained from a combined resistance of the resistance of the bulk of the electrolyte and the resistance of the grain boundary of the electrolyte.

The impedance measuring device 7 calculates the negative electrode reaction resistance of the secondary battery 2 based on identification impedance at a specific frequency among properties of the alternating current impedance. The resistance of the solid electrolyte and the resistance of the negative electrode included in the secondary battery 2 can be expressed by an equivalent circuit in which an electrolyte resistor ($R_{sep}$) is series-connected to a parallel circuit of the electrical double layer capacitance ($C_{dl}$) and the reaction resistor ($R_{act}$) of the negative electrode. From impedance of the equivalent circuit, when only the imaginary part ($Z_{im}$) is extracted, the following formula (4) is derived. Note that $\omega$ is an angular frequency determined by the frequency of the alternating current signal.

[Math. 4]

$$Z_{im} = \frac{-\omega C_{dl} R_{act}}{1 + \omega^2 C_{dl}^2 R_{act}^2} \qquad\qquad (4)$$

Furthermore, modification of the formula (4) derives the following formula (5).
[Math. 5]

$$-\frac{1}{\omega Z_{im}} = \frac{1}{\omega^2 C_{dl} R_{act}^2} + C_{dl} \qquad\qquad (5)$$

In the formula (5), $-1/(\omega Z_{im})$ is plotted on the vertical axis and $1/\omega^2$ is plotted on the horizontal axis to draw a graph, a straight line with an inclination of $1/C_{dl}R_{act}^2$ and $C_{dl}$ as an intercept is formed. The electrical double layer capacitance ($C_{dl}$) of the negative electrode is calculated from the intercept, and the negative electrode reaction resistance ($R_{act}$) can be calculated from the inclination ($1/C_{dl}R_{act}^2$).

Furthermore, in the embodiment, to estimate the contact state (contact area) of the negative electrode interface, after measuring the impedance value of the negative electrode interface, the measured impedance value is compared with the allowable impedance value to determine whether charging is possible. The allowable impedance value is the impedance value at which charging is allowed and the range of allowable impedance values (the allowable impedance range) indicates the range of the impedance values in which charging is allowed to be performed up to the desired chargeable capacity without the short circuit when the secondary battery 2 is charged at the charging current density set during charging. The allowable impedance range is determined experimentally according to the charging current density. Specifically, the allowable impedance range is determined from an allowable impedance map, which associates the charging current density with the allowable impedance value, and the charging current density.

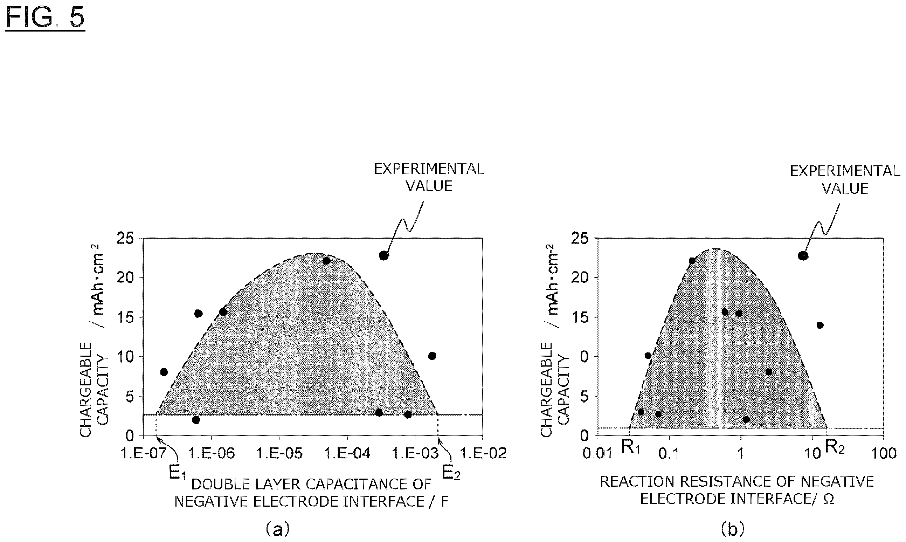

FIG. 5(a) is a graph showing a property of the chargeable capacity with respect to the double layer capacitance of the negative electrode interface, and FIG. 5(b) is a graph showing a property of the chargeable capacity with respect to the reaction resistance of the negative electrode interface. In FIG. 5, the vertical axis of each graph shows the chargeable capacity ($mAh\cdot cm^{-2}$), the horizontal axis of (a) shows the double layer capacitance (F) of the negative electrode interface, and the horizontal axis of (b) shows the reaction resistance ($\Omega$) of the negative electrode interface. Evaluation conditions to obtain the property shown in FIG. 5 are that while the solid electrolyte layer and the negative electrode are in contact with one another, a constant pressure is applied (for example, 1.5 MPa), and the temperature (for example, 25°C) is kept constant to set the charging current density constant ($1 \ mA/cm^2$). Using a reference battery equivalent to the all-solid-state battery, current is flowed under the evaluation conditions to experimentally obtain the impedance value (the double layer capacitance/the reaction resistance) of the negative electrode interface and the chargeable capacity.

The chargeable capacity indicates the capacity at which charging can be performed until the short circuit occurs due to the dendrite when the secondary battery 2 is charged at the charging current density under the evaluation conditions according to the contact area (the double layer capacitance/the reaction resistance) of the negative electrode interface. Under the predetermined evaluation conditions, the chargeable capacity according to the contact area of the negative electrode interface is measured, and the contact state (the double layer capacitance/the reaction resistance) of the negative electrode interface and the chargeable capacity are plotted on the horizontal axis and the vertical axis, respectively, and the experimental values are plotted. The property obtained from the experimental values becomes an upwardly convex graph (the dotted line graph) as illustrated in FIGs. 5(a, b).

As illustrated in FIG. 5(a), when the double layer capacitance is equivalent in magnitude to the contact state of the normal cell, the chargeable capacity becomes large. When the double layer capacitance is equivalent in magnitude to the excessively small contact (when the double layer capacitance is smaller than the magnitude equivalent to the contact state of the normal cell), the smaller the double layer capacitance is, the smaller the chargeable capacity becomes. In addition, when the double layer capacitance is equivalent in magnitude to the excessive contact (when the double layer capacitance is larger than the magnitude equivalent to the contact state of the normal cell), the larger the double layer capacitance is, the smaller the chargeable capacity becomes.

Further, as illustrated in FIG. 5(b), when the reaction resistance has the magnitude equivalent to the contact state of the normal cell, the chargeable capacity becomes large. When the reaction resistance has the magnitude equivalent to the excessively small contact (when the reaction resistance is smaller than the magnitude equivalent to the contact state of the normal cell), the larger the reaction resistance is, the smaller the chargeable capacity becomes. Furthermore, when the reaction resistance has the magnitude equivalent to the excessive contact (when the reaction resistance is larger than the magnitude equivalent to the contact state of the normal cell), the larger the reaction resistance is, the smaller the chargeable capacity becomes.

In the embodiment, the allowable impedance map having the property of the graphs of FIG. 5(a) and/or FIG. 5(b) is experimentally obtained and stored in the storage unit 82 of the controller 8. The allowable impedance map is a map according to the magnitude of the charging current density and is obtained by mapping the experimental values obtained from the reference battery equivalent to the secondary battery 2.

For example, when the secondary battery 2 is charged with the charging current density when the property of FIG. 5(a) is obtained, the chargeable capacity required after the charging is completed is 2.5 ($mAh\cdot cm^{-2}$). In this case, in the graph of FIG. 5(a), in the range surrounded by the upwardly convex dotted line graph, the range of the double layer capacitance in which the chargeable capacity becomes 2.5 ($mAh\cdot cm^{-2}$) or more (a range of $E_1$ or more and $E_2$ or less in FIG. 5(a)) is equivalent to the allowable impedance range. In addition, when the chargeable capacity required after charging is completed is set larger, when the contact area of the negative electrode interface is the excessively small or excessive state, the chargeable capacity becomes smaller, and therefore the chargeable capacity required after the charging is completed cannot be obtained. The allowable impedance range becomes narrower.

For example, when the secondary battery 2 is charged at the charging current density when the property shown in FIG. 5(b) is obtained, the chargeable capacity required after the charging is completed is 1.0 ($mAh\cdot cm^{-2}$). In the graph of FIG. 5 (b), in the range surrounded by the upwardly convex dotted line graph, the range of the reaction resistance in which the chargeable capacity becomes 1.0 ($mAh\cdot cm^{-2}$) or more (a range of $R_1$ or more and $R_2$ or less in FIG. 5 (b)) is equivalent to the allowable impedance range. Similarly to the double layer capacitance, in the reaction resistance, as the chargeable capacity required after the charging is completed is set larger, the allowable impedance range becomes narrower.

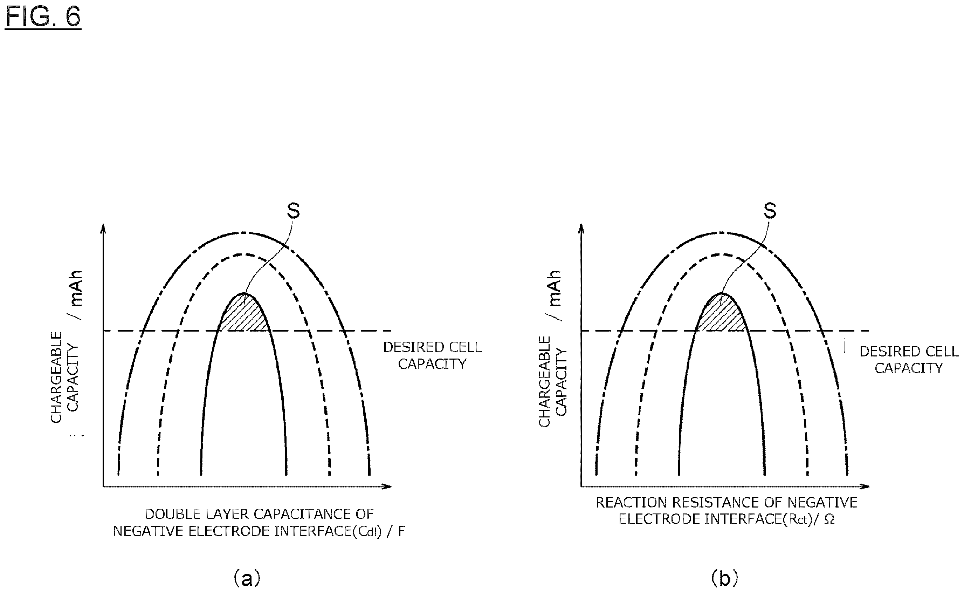

Further, the allowable impedance range differs according to the magnitude of the charging current density. FIG. 6(a) is a graph showing the property of the chargeable capacity with respect to the double layer capacitance of the negative electrode interface according to the magnitude of the charging current density. FIG. 6(b) is a graph showing the property of the chargeable capacity with respect to the reaction resistance of the negative electrode interface according to the magnitude of the charging current density. The vertical axis and the horizontal axis of FIGs. 6(a, b) are the same as the vertical axis and the horizontal axis of FIGs. 5(a, b). Each graph in FIGs. 6(a, b) shows the property when the magnitude of the charging current density is set to three levels. The solid line graph shows the property when the charging current density is the largest, the dotted line graph shows the property when the charging current density is the second largest, and the dashed dotted line graph shows the property when the charging current density is the smallest.

The allowable impedance range indicates the range of impedance values at which a capacity of a desired cell capacity (the chargeable capacity) or more can be charged. Furthermore, in the graphs of FIGs. 6(a, b), a region surrounded by the value of the desired cell capacity (the chargeable capacity) and each graph according to the charging current density is the range in which charging is allowed. In the example illustrated in FIG. 6 in which the magnitude of the charging current density is set in the three levels, when the charging current density is the largest, a region S is equivalent to the range in which charging is allowed. As the charging current density increases, the allowable impedance range narrows, and the range in which charging is allowed becomes narrower.

The controller 8 identifies the allowable impedance map from the charging current density of the secondary battery 2, with reference to the identified allowable impedance map, and determines the allowable impedance range. Using the impedance measuring device 7, the controller 8 measures the impedance value of the all-solid-state battery 2 before starting charging and/or during charging the secondary battery 2. The controller 8 determines whether the measured impedance value is within the allowable impedance range. When the controller 8 determines that the measured impedance value is within the allowable impedance range, the controller 8 allows charging the secondary battery 2. On the other hand, when the measured impedance value is determined to be outside the allowable impedance range, the controller 8 does not start charging in the case of before starting charging and stops the charging in the case of during charging.

Thus, in the embodiment, the contact state (the contact area) of the negative electrode interface is indirectly estimated from the impedance value of the secondary battery 2. The allowable impedance range is determined from the allowable impedance map and the charging current density and whether the measured impedance value is within the allowable impedance range is determined. When the measured impedance value is within the allowable impedance range, charging of the secondary battery 2 is allowed, and when the measured impedance value is outside the allowable impedance range, charging of the secondary battery 2 is not allowed.

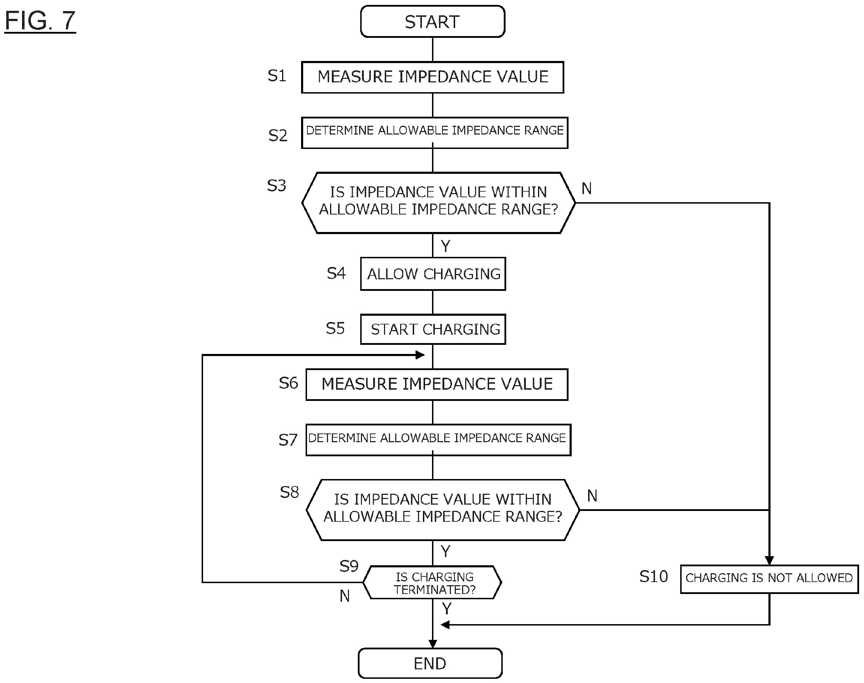

Next, the determination method of whether to allow the charging of the secondary battery 2 and the charging control method will be described. FIG. 7 is a flowchart depicting a procedure of the determination process and a procedure of a charging process in a charge control system.

In Step S1, before starting charging the secondary battery 2, the controller 8 measures the impedance value of the secondary battery 2 using the impedance measuring device 7. In Step S2, the controller 8 determines the allowable impedance range from the charging current density and the allowable impedance map. The charging current density is a current density set from Step S5 to Step S9 described later. The charging current density is preliminarily determined according to a charging sequence of the secondary battery 2. The controller 8 identifies the corresponding allowable impedance map from the charging current density set during charging the secondary battery 2. The controller 8 determines the impedance range meeting the chargeable capacity required to charge the secondary battery 2 (the desired chargeable capacity) on the identified allowable impedance map as the allowable impedance range.

In Step S3, the controller 8 determines whether the measured impedance value is within the allowable impedance range. When the measured impedance value is within the allowable impedance range, the controller 8 allows charging in Step S4. When the measured impedance value is outside the allowable impedance range, the controller 8 determines that the charging is not allowed to be performed in Step S10.

In Step S5, the controller 8 starts charging the secondary battery 2. In Step S6, the controller measures the impedance value of the secondary battery 2 using the impedance measuring device 7 during charging the secondary battery 2. In Step S7, the controller 8 determines the allowable impedance range. In Step S8, the controller 8 determines whether the measured impedance value is within the allowable impedance range. When the measured impedance value is within the allowable impedance range, in Step S9, the controller 8 continues charging and determines whether to terminate charging the secondary battery 2. For example, when the charging capacity of the secondary battery 2 reaches a target value, the controller 8 determines that the charging is terminated. When the charging has not terminated, the controller 8 performs a control flow at and after Step S6. When it is determined that the charging has terminated, the controller 8 terminates the control flow.

In the determination in Step S8, when the measured impedance value is outside the allowable impedance range, in Step S10, the controller 8 determines that the charging is not allowed to be performed. When the charging is determined not to be allowed to be performed, the controller 8 terminates the control flow.

As described above, in the embodiment, the controller 8 measures the impedance value in the negative electrode interface using the impedance measuring device 7, determines whether the measured impedance value is within the allowable impedance range, and allows charging the secondary battery 2 when the measured impedance value is within the allowable impedance range. The allowable impedance range is determined by the allowable impedance map and the charging current density to charge the secondary battery 2, and the allowable impedance map associates the charging current density with an allowable impedance value at which charging is allowed. Thus, after finding the contact area of the negative electrode interface from the impedance value, while the short circuit is reduced, the secondary battery 2 can be charged.

In the embodiment, the impedance value to be measured is the double layer capacitance and/or the reaction resistance of the negative electrode interface. Thus, after finding the contact area of the negative electrode interface from the impedance value, while the short circuit is reduced, the secondary battery 2 can be charged.

In the embodiment, the allowable impedance map is obtained by mapping the experimental values obtained from the reference battery equivalent to the secondary battery 2, and the allowable impedance range indicates the range of the impedance values in which charging can be performed up to the desired chargeable capacity without the short circuit when the secondary battery 2 is charged at the charging current density set during charging. Thus, after determining the allowable range of the impedance values to determine whether the charging can be performed, while the short circuit is reduced, the secondary battery 2 can be charged.

Working Examples

The following will describe the present invention based on the further detailed working examples, but the present invention is not limited to the working examples.

<Manufacturing Prototype (Working Examples)>

100 mg of sulfide solid electrolyte was weighed, put in a Macor tube, held with hard, Cr-plated pins made of SLD steel, and pressed at a pressure of 400 MPa at room temperature for one minute to obtain an electrolyte pellet (the solid electrolyte layer). On both surfaces of the above-described electrolyte pellet, Li foil having a thickness of 0.2 mm and SUS430 stainless steel foil having a thickness of 10 $\mu$m as a current collector were installed and the electrolyte pellet was pressed at room temperature at a pressure of 20 MPa for one second to manufacture a Li symmetrical cell. A confining pressure during assembling the cell was 4 MPa.

<Charge Condition>

A charge test was performed on the prototype of the working example (the Li symmetrical cell) obtained as described above. While a pressure of 1.5 MPa was applied, charging was performed at the measurement temperature of 25°C and a charging current density of 1 mA/cm$^2$. As an evaluation device, TOSCAT manufactured by TOYO SYSTEM CORPORATION was used.

<Electrochemical Measurement (Impedance Measurement)>

The impedance of the Li symmetrical cell was measured. The measurement temperature was 25°C, and Solartron 1260A was used as an evaluation device. The measurement frequency was from 10 MHz to 0.05 Hz, and the amplitude was 10 mV.

<Evaluation of Working Examples>

When the impedance values (the double layer capacitance/the reaction resistance) obtained from the evaluation result of the above-described prototype and values of the chargeable capacity were plotted, the properties shown in FIG. 5 were able to be obtained.

The embodiments and the working examples of the present invention described above are described for ease of understanding of the present invention and are not described to limit the present invention. Accordingly, each element disclosed in the above-described embodiments includes all design changes and equivalents that fall within the technical scope of the present invention.

Description of Reference Numerals

1    Charge control system
2    Secondary battery
3    Voltage sensor

4    Temperature sensor
5    Voltage and current regulator
6    Current sensor
7    Impedance measuring device
8    Controller
9    External power supply

**Claims**

1.  A method for charging an all-solid-state battery that includes a negative electrode containing lithium metal and a solid electrolyte layer, the method comprising:

    measuring an impedance value between the negative electrode and the solid electrolyte layer, using an impedance measuring device that measures impedance of the all-solid-state battery in an interface;
    determining whether the measured impedance value is within an allowable impedance range; and
    allowing charging the all-solid-state battery when the measured impedance value is within the allowable impedance range, wherein
    the allowable impedance range is determined by an allowable impedance map and a charging current density to charge the all-solid-state battery, and the allowable impedance map associates the charging current density with an allowable impedance value at which charging is allowed.

2.  The charging method according to claim 1, wherein
    the impedance value is a double layer capacitance of the interface.

3.  The charging method according to claim 1, wherein
    the impedance value is a reaction resistance of the interface.

4.  The charging method according to any one of claims 1 to 3, wherein

    the allowable impedance map is obtained by mapping experimental values obtained from a reference battery equivalent to the all-solid-state battery, and
    the allowable impedance range indicates a range of the impedance values in which charging is allowed to be performed up to a desired chargeable capacity without short circuit when the all-solid-state battery is charged at the charging current density set during charging.

5.  A charge control device that controls charging of an all-solid-state battery that includes a negative electrode containing lithium metal and a solid electrolyte layer, comprising:

    an impedance measuring device that measures an impedance value in an interface between the negative electrode and the solid electrolyte layer; and
    a controller that determines whether the all-solid-state battery is allowed to be charged, wherein
    the controller:

        determines whether the impedance value measured by the impedance measuring device is within an allowable impedance range; and
        allows charging the all-solid-state battery when the measured impedance value is within the allowable impedance range, and

    the allowable impedance range is determined by an allowable impedance map and a charging current density to charge the all-solid-state battery, and the allowable impedance map associates the charging current density with an allowable impedance value at which charging is allowed.

FIG. 1

FIG. 2

EP 4 456 251 A1

FIG. 3

FIG. 4

(a) EXCESSIVELY SMALL CONTACT

(b) NORMAL CELL

(c) EXCESSIVE CONTACT

FIG. 5

(a)

(b)

EP 4 456 251 A1

FIG. 6

(a)

CHARGEABLE CAPACITY / mAh

S

DESIRED CELL CAPACITY

DOUBLE LAYER CAPACITANCE OF
NEGATIVE ELECTRODE INTERFACE($C_{dl}$) / F

(b)

CHARGEABLE CAPACITY / mAh

S

DESIRED CELL CAPACITY

REACTION RESISTANCE OF NEGATIVE
ELECTRODE INTERFACE($R_{ct}$)/ Ω

## FIG. 7

START

S1 | MEASURE IMPEDANCE VALUE

S2 | DETERMINE ALLOWABLE IMPEDANCE RANGE

S3 | IS IMPEDANCE VALUE WITHIN ALLOWABLE IMPEDANCE RANGE? — N

Y

S4 | ALLOW CHARGING

S5 | START CHARGING

S6 | MEASURE IMPEDANCE VALUE

S7 | DETERMINE ALLOWABLE IMPEDANCE RANGE

S8 | IS IMPEDANCE VALUE WITHIN ALLOWABLE IMPEDANCE RANGE? — N

Y

S9 | IS CHARGING TERMINATED?
N
Y

S10 | CHARGING IS NOT ALLOWED

END

| INTERNATIONAL SEARCH REPORT | International application No. |
|---|---|
| | **PCT/IB2022/000651** |

**A.    CLASSIFICATION OF SUBJECT MATTER**

*H01M 10/48*(2006.01)i; *H02J 7/00*(2006.01)i
FI:    H01M10/48 301; H01M10/48 P; H02J7/00 P

According to International Patent Classification (IPC) or to both national classification and IPC

**B.    FIELDS SEARCHED**

Minimum documentation searched (classification system followed by classification symbols)

H01M10/48; H02J7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2021/028707 A1 (NISSAN MOTOR CO., LTD.) 18 February 2021 (2021-02-18) paragraphs [0010]-[0089], fig. 1-11 | 1-5 |
| A | JP 2017-84453 A (NIPPON SOKEN INC.) 18 May 2017 (2017-05-18) paragraph [0076], fig. 6, 7 | 1-5 |
| A | JP 2020-167069 A (NISSAN MOTOR CO., LTD.) 08 October 2020 (2020-10-08) paragraphs [0016]-[0065], fig. 1-7 | 1-5 |
| A | JP 2021-77569 A (NISSAN MOTOR CO., LTD.) 20 May 2021 (2021-05-20) paragraphs [0060]-[0066], fig. 6 | 1-5 |
| A | JP 2016-85062 A (ENNET CO., LTD.) 19 May 2016 (2016-05-19) paragraphs [0050]-[0078], fig. 1-5 | 1-5 |

☐ Further documents are listed in the continuation of Box C.        ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 February 2023** | **07 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/IB2022/000651**

| Patent document cited in search report | | | Publication date (day/month/year) | Patent family member(s) | Publication date (day/month/year) |
|---|---|---|---|---|---|
| WO | 2021/028707 | A1 | 18 February 2021 | US 2022/0320611 A1 paragraphs [0019]-[0106], fig. 1-11 | |
| JP | 2017-84453 | A | 18 May 2017 | (Family: none) | |
| JP | 2020-167069 | A | 08 October 2020 | (Family: none) | |
| JP | 2021-77569 | A | 20 May 2021 | (Family: none) | |
| JP | 2016-85062 | A | 19 May 2016 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021207116 A

- JP 2020167069 A